**Europäisches Patentamt**

**European Patent Office**

**Office européen des brevets**

(11) Veröffentlichungsnummer: **0 422 432 A1**

# EUROPÄISCHE PATENTANMELDUNG

(21) Anmeldenummer: **90118240.2**

(22) Anmeldetag: **22.09.90**

(51) Int. Cl.5: **F01N 3/22**

(30) Priorität: **11.10.89 DE 3933924**

(43) Veröffentlichungstag der Anmeldung:
**17.04.91 Patentblatt 91/16**

(84) Benannte Vertragsstaaten:
**DE ES FR GB IT SE**

(71) Anmelder: **Bayerische Motoren Werke**
**Aktiengesellschaft**
**Patentabteilung AJ-30 Postfach 40 02 40**
**Petuelring 130**
**W-8000 München 40(DE)**

(72) Erfinder: **Neumann, Jürgen**
**Otto-Dirschner-Weg 18**
**W-8000 München 60(DE)**

(54) **Verfahren zur Abgasnachbehandlung an einer Brennkraftmaschine.**

(57) Um die Aufheizphase eines Abgaskatalysators (10) (insbesondere 3-Wege-Katalysators) zu verkürzen, ist diesem ein Nachbrenner (9) vorgeschaltet. Der Nachbrenner (9) erhält Abgas fetten Gemisches von der Brennkraftmaschine (1) und zusätzlich einen Frischluftstrom. Der Frischluftstrom wird vom Ansaugtrakt (2) der Brennkraftmaschine (1) stromab eines Luftmassenmessers (5) abgezweigt. Dem verbleibenden Rest-Ansaugluftstrom wird Brennstoff in einer solchen Menge zugeführt, daß sich für den im Luftmassenmesser (5) bestimmten Ansaugluftstrom ein stöchiometrisches oder überstöchiometrisches Gemisch ($\lambda \geqq 1$) ergäbe. Somit wird zum einen die Brennkraftmaschine (1) gewünscht fett betrieben, während im Nachbrenner (9) Abgas mit brennbaren Gemisch-Anteilen vorliegt. Die Verbrennung dieser Abgasanteile führt zur Wärmefreisetzung und damit zu einer schnellen Aufheizung des Katalysators (10). Während der Warmlaufphase der Brennkraftmaschine (1) kann der Katalysator (10) somit früher erfolgreich schädliche Abgas-Bestandteile konvertieren.

EP 0 422 432 A1

# VERFAHREN ZUR ABGASNACHBEHANDLUNG AN EINER BRENNKRAFTMASCHINE

Die Erfindung betrifft ein Verfahren zur Abgasnachbehandlung an einer Brennkraftmaschine, deren Ansaugluftstrom Brennstoff in einem definierten Luft-/Brennstoffverhältnis beigegeben wird, wobei die Abgase der Brennkraftmaschine zunächst einem Nachbrenner und anschliessend daran einem Katalysator zugeführt werden. Ein derartiges Verfahren ist aus der US 3 889 464 bekannt.

Üblicherweise werden die Abgase insbesondere gemischverdichtender, fremdgezündeter Brennkraftmaschinen durch einen Abgas-Katalysator geleitet, der mit Erreichen seiner Arbeitstemperatur bzw. nach Überschreiten seiner Anspringtemperatur in der Lage ist, einen Großteil der schädlichen Abgas-Bestandteile erfolgreich zu konvertieren. Sollen dabei sämtliche Abgas-Schadstoffe möglichst umfassend umgewandelt werden, so ist es ertorderlich, die Brennkraftmaschine mit Ansaugluft und Brennstoff in einem exakt definierten Luft-Brennstoffverhältnis zu versorgen. Wie bereits angedeutet, muß darüber hinaus der Katalysator eine gewisse Arbeitstemperatur aufweisen, die jedoch anschließend an einen Start der Brennkraftmaschine noch nicht vorliegt.

Um die Aufheizphase des Katalysators zu beschleunigen, um diesen also schneller auf seine Anspring- bzw. Arbeitstemperatur zu bringen, ist es aus der oben genannten Schrift bekannt, dem Katalysator einen Abgas-Nachbrenner vorzuschalten. In diesem Nachbrenner werden die unmittelbar nach einem Start der Brennkraftmaschine ebenfalls noch relativ kalten, brennbare Bestandteile enthaltenden Abgase nochmals verbrannt, womit sich zwei vorteilhafte Effekte einstellen: Zum einen kann durch diese Verbrennung der Anteil schädlicher Abgas-Bestandteile verringert werden, zum anderen wird die Temperatur des Abgases weiter erhöht, wodurch der nachgeschaltete, vom erhitzten Abgas durchströmte Katalysator schneller seine Arbeitstemperatur erreicht.

Bekannt sind Abgas-Nachbrenner, denen Abgas mit noch brennfähigen Bestandteilen (Kohlenwasserstoffen) zugeführt wird und die darüber hinaus über irgendwelche Quellen die für die Nachverbrennung erforderliche Frischluft erhalten. Vorgesehen sein können darüber hinaus irgendwie geartete Zündvorrichtungen. Da jedoch in Versuchen die Verwendung derartiger bekannter Nachbrenner nicht zu einer befriedigenden Reduzierung schädlicher Abgas-Bestandteile in der Warmlaufphase der Brennkraftmaschine bzw. der Aufheizphase des Katalysators führte, hat sich die Erfindung zur Aufgabe gestellt, hier Abhilfe zu schaffen.

Zur Lösung dieser Aufgabe ist vorgesehen, daß ein dem Nachbrenner zusätzlich zugeführter Frischluftstrom vom bereits quantitätsmäßig bestimmten Ansaugluftstrom der Brennkraftmaschine vor Beigabe des Brennstoffs abgezweigt wird. Dieses Verfahren ist dabei sowohl bei 3-Wege-Katalysatoren als auch bei Oxydationskatalysatoren, bei welchen die Brennkraftmaschine üblicherweise überstöchiometrisch betrieben wird, anwendbar. Abwei chend vom bei 3-Wege-Katalysatoren üblichen definierten (stöchiometrischen) Luft-/Brennstoffverhältnis ($\lambda = 1$) wird die Brennkraftmaschine nunmehr - zumindest in der Aufheizphase des Katalysators mit fetterem Gemisch ($\lambda < 1$) betrieben, da vom Ansaugluftstrom ein Teilstrom in Form des für den Nachbrenner bestimmten Frischluftstroms abgezweigt wird, nachdem die Größe des Ansaugluftstromes bestimmt wurde. Dennoch wird dem verbleibenden Rest-Ansaugluftstrom die dem Gesamt-Ansaugluftstrom zustehende Brennstoffmenge beigegeben. Auch bei Oxydationskatalysatoren stellt sich hiermit ein gegenüber dem definierten Luft-/Brennstoffverhältnis fetteres Gemisch ein. Das Abgas der Brennkraftmaschine enthält somit noch verbrennbare Bestandteile. Abgestimmt auf die Menge dieser verbrennbaren Bestandteile wird dem Abgas nunmehr im Nachbrenner der zuvor abgezweigte Frischluftstrom zugeführt, so daß das daraufhin den Nachbrenner verlassende Abgas eine dem definierten Gemisch entsprechende Zusammensetzung (beispielsweise stöchiometrisch: $\lambda = 1$) aufweist. Sofort mit Erreichen der Arbeitstemperatur ist der Katalysator in der Lage, schädliche Bestandteile des Abgases erfolgreich zu konvertieren. Die Abgasemissionen einer Brennkraftmaschine lassen sich somit während der Aufheizphase eines Katalysators deutlich verringern.

Vorteilhafterweise ist dieses Verfahren auch geeignet, die Abgasemissionen während der Warmlaufphase der Brennkraftmaschine zu verbessern. Wegen unzureichender Gemischbildungs- bzw. Entflammungsbedingungen werden Brennkraftmaschinen zur Komfortsteigerung während ihrer Warmlaufphase oftmals mit überfettetem Gemisch ($\lambda < 1$) betrieben. Die Schadstoffe des daraus resultierenden Abgases können jedoch im Abgaskatalysator nicht vollständig umgewandelt werden. Zweigt man nunmehr jedoch vom bereits quantitätsmäßig bestimmten Ansaugluftstrom der Brennkraftmaschine einen Teilstrom ab und führt diesen Teilstrom dem Abgas der Brennkraftmaschine stromauf des Katalysators wieder zu, so ist es einerseits möglich, die Brennkraftmaschine mit fettem Gemisch zu betreiben, während andererseits der Katalysator von einem zusammengesetzten Luft-/Abgasstrom, der dem definierten Luft-/Kraftstoff-Verhältnis entspricht, beaufschlagt wird. In einer weiteren vorteilhaften Weiterbildung der Erfindung (Anspruch 4) ist es darüber hinaus möglich, die Menge des Frischluftstromes in Abhängigkeit einer oder mehrerer Parameter zu regeln. Neben der Berücksichtigung aktueller Temperaturverhältnisse - insbesondere am Katalysator - ist darüber hinaus eine zeit- oder betriebspunktabhängige Regelung denkbar.

Unter Benutzung des beanspruchten Verfahrens hat sich die Erfindung weiterhin die Aufgabe gestellt, eine vorteilhafte Vorrichtung zur Durchführung dieses Verfahrens aufzuzeigen. So beschreibt Anspruch 5 eine den Frischluftstrom zum Nachbrenner führende Bypassleitung, wobei ein irgendwie geartetes Steuerorgan vorgesehen ist, mit Hilfe dessen die Menge des Frischluftstromes beeinflußbar ist. Neben einer Regelung der Menge des Frischluftstromes gemäß Anspruch 4 ist hiermit auch eine einfache Steuerung der Menge des Frischluftstromes möglich. Die entsprechende Steuerungsvorschrift kann dabei beispielsweise in einer üblicherweise ohnehin vorhandenen elektronischen Steuereinheit für die Brennkraftmaschine abgelegt sein. Neben einfachen Drosselorganen kann die Steuerung bzw. Regelung der Menge des Frischluftstromes durch entsprechenden Betrieb einer gemäß Anspruch 6 vorgesehenen Fördervorrichtung für den Frischluftstrom erfolgen. Bei dieser Fördervorrichtung kann es sich beispielsweise um eine von der Brennkraftmaschine direkt angetriebene Pumpe handeln. Es ist aber ebenso möglich, den Frischluftstrom allein unter Einfluß der in der Abgasanlage der Brennkraftmaschine auftretenden Unterdruck-Pulsationen zu fördern.

Die Ansprüche 7 und 8 beschreiben zwei Möglichkeiten, den Frischluftstrom vom Ansaugluftstrom abzuzweigen. Die Merkmale des Anspruchs 7 haben dabei den Vorteil, daß stromauf des Drosselorganes Umgebungsdruck vorliegt, so daß für die Förderung des Frischluftstromes lediglich eine relativ niedrige Förderleistung benötigt wird. Wird hingegen der Frischluftstrom gemäß Anspruch 8 stromab des Drosselorganes abgezweigt, so ist vorteilhafterweise die Menge des abgezweigten Frischluftstromes quasi selbsttätig abhängig von der Menge des jeweils aktuellen Ansaugluftstromes.

Stellvertretend für ein bevorzugtes Ausführungsbeispiel wird die Erfindung anhand der beigefügten Prinzipskizze nochmals erläutert.
Gezeigt ist eine Brennkraftmaschine 1, die einen Ansaugtrakt 2 sowie einen Abgastrakt 3 aufweist. Der Ansaugtrakt 2 setzt sich zusammen aus einem Einlauf 4, einem Luftmassenmesser 5 zur quantitätsmäßigen Bestimmung des Ansaugluftstromes, einem den Ansaugluftstrom quantitätsmäßig beeinflussenden Drosselorgan in Form einer Drosselklappe 6, sowie sich danach verzweigenden, zu den einzelnen Zylindern der Brennkraftmaschine führenden Zylindersaugrohren 7.
Der Abgastrakt 3 besteht im wesentlichen aus einem die Abgase der einzelnen Brennkraftmaschinen-Zylinder zusammenführenden Abgaskrümmer 8, einem sich daran anschließenden Nachbrenner 9, einem 3-Wege-Katalysator 10, sowie einem bei 11 in die Umgebung mündenden Schalldämpfer 12. Dem Ansaugluftstrom wird stromab der Droselklappe 6 über ein Einspritzventil 13 Brennstoff beigegeben, wobei die erforderliche Brennstoffmenge durch entsprechende Ansteuerung des Einspritzventiles 13 bestimmt wird. Zur Ansteuerung des Einspritzventiles 13 ist eine elektronische Steuereinheit 14 vorgesehen, die ihrerseits Signale vom Luftmassenmesser 5 erhält und hieraus den den Luftmassenmesser 5 durchströmenden Ansaugluftstrom mengenmäßig bestimmt.

Stromab des Luftmassenmessers 5 zweigt vom Ansaugtrakt 2 eine Bypassleitung 15 ab, die mit einer Fördervorrichtung 16 in Form einer von der Brennkraftmaschine 1 angetriebenen Pumpe versehen ist und ihrerseits im Nachbrenner 9 mündet. Desweiteren ragt in den Nachbrenner 9 eine Zündvorrichtung 17 hinein, die ebenfalls von der elektronischen Steuereinheit 14 angesteuert wird.

Der Katalysator 10 ist ein üblicher 3-Wege-Katalysator, der seine beste Konvertierungsrate aufweist, wenn er mit Abgas stöchiometrischen Gemisches ($\lambda = 1$) betrieben wird. Allerdings muß der Katalysator hierzu auch seine minimale Arbeitstemperatur besitzen.

Um diese Arbeitstemperatur anschließend an einen Kaltstart der Brennkraftmaschine schneller zu erreichen, ist stromauf des Katalysators 10 ein Nachbrenner 9 vorgesehen. Dieser Nachbrenner 9 erhält Abgas fetten Gemisches von der Brennkraftmaschine 1. Zugleich wird über die Bypassleitung 15 Frischluft in den Nachbrenner eingeblasen. Mit Inbetriebnahme der Zündvorrichtung 17 kann somit im Nachbrenner 9 das zugeführte Abgas weiterverbrannt werden. Einerseits wird hierdurch die Anzahl schädlicher Abgasbestandteile herabgesetzt, andererseits die Temperatur des Abgases erhöht, so daß der hiervon beaufschlagte Katalysator 10 schneller seine Arbeitstemperatur erreicht.

Der Nachbrenner 9 erhält Abgas fetten Gemisches und gleichzeitig Frischluft in einem derartigen Mischungsverhältnis, daß auch in der Brennkammer des Nachbrenners stöchiometrische oder überstöchiometrische Verhältnisse vorliegen. Um auf einfache Weise im Nachbrenner 9 bzw. in dessen Brennkammer das gewünschte, beispielsweise stöchiometrische Luftverhältnis einzustellen, wird der dem Nachbrenner 9 zugeführte Frischluftstrom vom Ansaugtrakt 2 stromab des Luftmassenmessers 5 abgezweigt. Da der elektronischen Steuereinheit 14 lediglich der den Luftmassenmesser 5 durchströmende Ansaugluftstrom quantitätsmäßig bekannt ist, mißt die Steuereinheit dem stromab der Drosselklappe 6 verbleibenden Rest-Ansaugluftstrom exakt eine derartige Brennstoffmenge zu, daß im Nachbrenner wiederum das dem definierten Gemisch entsprechende Abgas vorliegt. Erwünschtermaßen wird dabei die Brennkraftmaschie 1 mit fettem Gemisch (λ<1) betrieben.

Vorzugsweise wird das beschriebene Verfahren nur solange betrieben, bis der Katalysator 10 und/oder die Brennkraftmaschine 1 ihre Arbeits- bzw. Betriebstemperatur erreicht haben. Hiernach wird die Bypassleitung 15 beispielsweise durch entsprechende Ansteuerung der Fördervorrichtung 16 - veranlaßt von der elektronischen Steuereinheit 14 - abgesperrt. Auch die Zündvorrichtung 17 kann dann stillgelegt werden. Selbstverständlich kann zur Bestimmung bzw. Einstellung des definierten (beispielsweise stöchiometrischen) Gemisches im Abgastrakt 3 stromab der Einmündung des Frischluftstromes auch ein Sauerstoffsensor (λ-Sonde) vorgesehen sein. Darüber hinaus soll nochmals darauf hingewiesen werden, daß das erfindungsgemäße Verfahren nicht auf einem 3-Wege-Katalysator beschränkt ist, sondern auch bei Oxydationskatalysatoren angewendet werden kann.

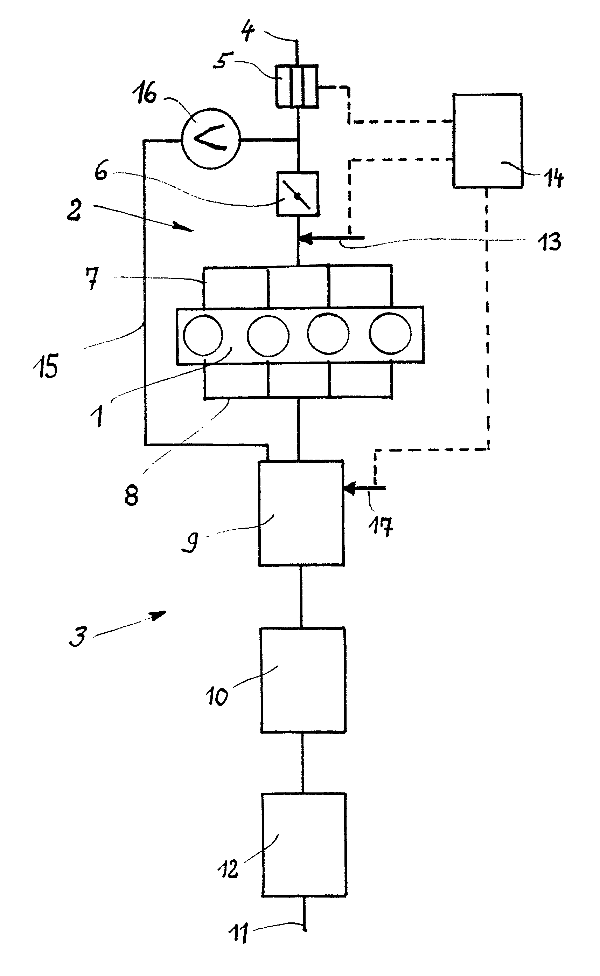

## Ansprüche

1. Verfahren zur Abgasnachbehandlung an einer Brennkraftmaschine, deren Ansaugluftstrom Brennstoff in einem definierten Luft-/Brennstoffverhältnis beigegeben wird, wobei die Abgase der Brennkraftmaschine zunächst einem Nachbrenner und anschliessend daran einem Katalysator zugeführt werden,
dadurch gekennzeichnet, daß ein dem Nachbrenner zusätzlich zugeführter Frischluftstrom vom bereits quantitätsmäßig bestimmten Ansaugluftstrom der Brennkraftmaschine vor Beigabe des Brennstoffs abgezweigt wird.

2. Verfahren nach Anspruch 1,
dadurch gekennzeichnet, daß der mit einer Zündeinrichtung versehene Nachbrenner im wesentlichen nur so lange betrieben wird, als der Katalysator eine niedrigere als seine Arbeitstemperatur aufweist.

3. Verfahren nach Anspruch 1 oder 2,
dadurch gekennzeichnet, daß bei abgeschaltetem Nachbrenner und Betrieb der Brennkraftmaschine mit unterstöchiometrischem Gemisch weiterhin vom Ansaugluftstrom ein Frischluftstrom abgezweigt und dem Abgas stromauf des Katalysators zugeführt wird.

4. Verfahren nach einem der vorangegangenen Ansprüche,

dadurch gekennzeichnet, daß die Menge des vom Ansaugluftstrom abgezweigten Frischluftstromes geregelt wird.

5. Vorrichtung zur Durchführung des Verfahrens nach einem der Ansprüche 1 bis 4,
dadurch gekennzeichnet, daß die Menge des in einer vom Ansaugtrakt (2) der Brennkraftmaschine abzweigenden und im Abgastrakt (3) der Brennkraftmaschine mündenden Bypassleitung (15) geführten Frischluftstromes beeinflußbar ist.

6. Vorrichtung nach Anspruch 5,
dadurch gekennzeichnet, daß in der Bypassleitung (15) eine Fördervorrichtung (16) für den Frischluftstrom vorgesehen ist.

7. Vorrichtung nach Anspruch 5 oder 6,
dadurch gekennzeichnet, daß die Bypassleitung (15) vom Ansaugtrakt (2) stromauf eines den Ansaugluftstrom quantitätsmäßig beeinflussenden Drosselorganes (Drosselklappe 6) abzweigt.

8. Vorrichtung nach Anspruch 5 oder 6,
dadurch gekennzeichnet, daß die Bypassleitung (15) vom Ansaugtrakt (2) stromab eines den Ansaugluftstrom quantitätsmäßig beeinflussenden Drosselorganes (Drosselklappe 6) abzweigt.

| | Europäisches Patentamt | EUROPÄISCHER RECHERCHENBERICHT | Nummer der Anmeldung |
|---|---|---|---|

EP 90 11 8240
Seite 1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | DE-A-3506235 (VOLKSWAGENWERK) <br> * Seite 5, Absatz 2 - Seite 7, letzter Absatz; Figur 1 * | 1, 4, 5, 7 | F01N3/22 |
| A | | 2 | |
| Y | FR-A-2107445 (ZEUNA-STÄRKER KG) <br> * Seite 2, Zeile 22 - Seite 4, Zeile 22 * | 1, 4-7 | |
| Y | DE-A-2715951 (BAYERISCHE MOTOREN WERKE) <br> * Seite 5, Absatz 2 - Seite 7, Absatz 1; Figur 1 * | 1, 4-7 | |
| A | DE-A-3835939 (VOLKSWAGENWERK) <br> * Spalte 1, Zeile 64 - Spalte 4, Zeile 7; Figur 1 * | 1, 2 | |
| A | FR-A-2163087 (ROBERT BOSCH G.M.B.H.) <br> * Seite 5, Zeile 6 - Seite 6, Zeile 18; Figur 1 * | 1, 2 | |
| A | FR-A-2201710 (REGIE NATIONALE DES USINES RENAULT) <br> * Seite 4, Zeile 29 - Seite 6, Zeile 32; Figuren 1, 2 * | 1 | **RECHERCHIERTE SACHGEBIETE (Int. Cl.5)** <br><br> F01N |
| A | US-A-3826089 (NAKAJIMA) <br> * Spalte 3, Zeile 64 - Spalte 4, Zeile 63; Figur 3 * | 1 | |
| A | US-A-4023359 (MASAKI) <br> * Spalte 5, Zeile 27 - Spalte 6, Zeile 29; Figur 1 * | 1 | |
| A | US-A-4132070 (GARCEA) <br> * Spalte 5, Zeile 34 - Spalte 6, Zeile 59; Figur 2 * | 1 | |
| A | EP-A-0166480 (CARBONI) <br> * Seite 5, Zeile 22 - Seite 9, Zeile 23; Figur 1 * | 1 | |

Der vorliegende Recherchenbericht wurde für alle Patentansprüche erstellt

| Recherchenort | Abschlußdatum der Recherche | Prüfer |
|---|---|---|
| DEN HAAG | 13 DEZEMBER 1990 | FRIDEN C.M. |

Europäisches
Patentamt

**EUROPÄISCHER RECHERCHENBERICHT**

Nummer der Anmeldung

EP   90 11 8240
Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| | ----- | | |

**RECHERCHIERTE SACHGEBIETE (Int. Cl.5)**

Der vorliegende Recherchenbericht wurde für alle Patentansprüche erstellt

| Recherchenort | Abschlußdatum der Recherche | Prüfer |
|---|---|---|
| DEN HAAG | 13 DEZEMBER 1990 | FRIDEN C.M. |